Europäisches Patentamt

**European Patent Office**

**Office européen des brevets**

(11) Publication number: **0 433 684 A2**

## (12) EUROPEAN PATENT APPLICATION

(21) Application number: **90122198.6**

(22) Date of filing: **20.11.90**

(51) Int. Cl.5: **C04B 32/00**, C04B 33/13, C03C 6/00, //(C04B32/00,18:04)

(30) Priority: **22.11.89 IT 2248789**

(43) Date of publication of application:
**26.06.91 Bulletin 91/26**

(84) Designated Contracting States:
**AT BE DE DK ES FR GB GR LU NL SE**

(71) Applicant: **CONTENTO TRADE S.A.S. di CIOFFI ILARIA**
**14, Via Santa Barbara**
**Valpicetto di Rigolato, Udine(IT)**

(72) Inventor: **Contento, Maria Pia**
**506, V.1e Venezia**
**I-33100 Udine(IT)**
Inventor: **Cioffi, Flavio**
**506, V.le Venezia**
**I-33100 Udine(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**W-8000 München 40(DE)**

(54) Process for the recovery of inorganic industrial waste.

(57) Described is a process for the recovery of inorganic industrial waste which comprises the steps of shaping it, in the presence of a thermomeltable binder, into construction products and treating the shaped products at elevated temperature.

EP 0 433 684 A2

# PROCESS FOR THE RECOVERY OF INORGANIC INDUSTRIAL WASTE

The present invention relates to a process for the recovery (reuse) of inorganic industrial waste.

More specifically, the present invention relates to a process for the recovery of essentially inorganic industrial waste and is generally suitable for the recovery of highly polluting waste such as arsenic and compounds thereof and heavy metals such as lead, cadmium, copper, zinc, manganese, chromium etc., present both in ionic and in metal form.

The term inorganic industrial waste, as used in the present description and the appended claims, relates to toxic, harmful or particular industrial waste referred to in the "Decreto del Presidente della Repubblica Italiana n.915" of September 10, 1982, and its subsequent modifications such as furnace scum, burnt coal slag, sludge from scrubbing, sludge form grinding, mud and slag from the processing of minerals, electric furnace slag, waste from the processing of ceramics, sludge from chemical and electrochemical processing, etc.

This kind of waste, unlike organic waste which can be eliminated by combustion or through chemical and/or biological processes, is practically indestructible and for many years has been accumulated in abandoned areas or discharged directly into the sea.

Both of these procedures are no longer feasible as the pollution of the underground water and of the coasts has become so high that the authorities have been forced to prohibit this kind of discharge.

There has now been found a process for the recovery of inorganic industrial waste which avoids all kinds of pollution, as this waste, after having been treated in accordance with the present invention, does not release any polluting sub stance whatsoever, even if immersed in concentrated sulphuric or hydrochloric acid. Therefore, the present invention provides a process for the recovery of inorganic industrial waste which comprises the steps of shaping it, in the presence of a thermomelting binder, into construction products and of treating the shaped products at elevated temperature.

The term "construction products" as used herein denotes articles for the building industry, such as bricks, self-blocking and non self-blocking lumps, tiles for floors or for the lining of drains or of electrical wire guiding slits, roof-tiles, pipes, etc.

More specifically, the process of the present invention comprises:

(a) grinding the industrial waste together with a thermomeltable binder to an average particle size ranging from 100 to 200 $\mu$m,

(b) mixing the powder thus obtained with water;

(c) shaping the mixture obtained in step (b) into construction products and drying them to constant weight; and

(d) baking the articles of step (c) at elevated temperature.

In accordance with the present invention, the termomeltable binder may be added to the waste mixture or may already be contained therein. In both cases, the amount of binder is generally higher than 59% by weight of the total amount of the dry mixture, preferably of from 10 to 60% by weight.

Examples of suitable thermomeltable binders are the different types of clay, such as montmorillonite, illite, bentonite, etc., glass, silica, alumina, silico-aluminates such as mica, etc.

After having been grinded, the powder is mixed with water until a mixture is obtained which is suitable for extrusion, die-casting or casting. Amounts of water ranging from 5 to 200% by weight of the total amount of dry matter are generally used. To facilitate the mixing with water, damping and/or fluidifying additives may be used, for example those available on the market under the trade-names TECNOFLUID® and TECNOSLUMP® (Societa' Tecniche Industriali S.r.l. of Campoformido (Udine)).

After shaping, the article is dried to constant weight at a temperature which usually is lower than 250° C and preferably ranges from 30 to 100° C.

After drying, the shaped product is baked in an oven at temperatures and for periods of time which depend on the composition and size of the article. Temperatures higher than 800° C, generally of from 1,000 to 1,500° C and baking times greater than one hour, generally from 2 to 6 hours, are normally used.

The articles produced by the process of the present invention generally show a compression stress, according to UNI 5632, which is higher than 50 kg/cm$^2$, usually from 100 to 3,000 kg/cm$^2$, and a bending stress, according to UNI EN 101, which is higher than 15 kg/cm$^2$, usually from 50 to 300 kg/cm$^2$.

When the articles are submitted to a release test in accordance with the method described in the "Gazzetta Ufficiale della Repubblica Italiana" of August 8th, 1986, pages 17 ff, they comply with all of the non-toxicity requirements referred to in the "Decreto del Presidente della Repubblica of September 10th, 1982, no. 915.

The following non-limitative examples are given to illustrate the present invention.

EXAMPLES 1 to 3

Samples of different kinds of inorganic industrial waste were prepared by mixing with 20% by weight of water, based on the dried product. The compositions, processing conditions and characteristics of the obtained products are listed below.

| 1. Composition: | |
|---|---|
| Montmorillonite | 40% |
| Mold-release sand (olivine) (non-toxic and not harmful) | 40% |
| Electric furnace slag (non-toxic and not harmful) | 20% |
| Particle size | 200 $\mu$m |
| Drying time | 24 hrs at 75° C |
| Dimensions of sample after drying | 40x40x160 mm |
| Baking time | 3 hrs at 1080° C |
| Shrinkage after baking | 1% |
| Compression stress | 250 kg/cm$^2$ (UNI 5632) |
| Bending stress | 75 kg/cm$^2$ (UNI EN 101) |
| Release Test | The sample satisfied the non-toxicity requirements as specified in the D.P.R. no.915 of 10.9.1982 |

| 2. Composition: | |
|---|---|
| Montmorillonite | 30% |
| Mold-release sand (olivine (non-toxic and not harmful) | 30% |
| Sludge from scrubbing of electric furnace (toxic and harmful) | 40% |
| Particle size | 200 $\mu$m |
| Drying time | 24 hrs at 75° C |
| Dimensions of sample after drying | 40x40x160 mm |
| Baking Time | 3 hrs at 1130° C |
| Shrinkage after baking | 5% |
| Compression stress | 2500 kg/cm$^2$ (UNI 5632) |
| Bending stress | 200 kg/cm$^2$ (UNI EN 101) |
| Release Test | The sample satisfied the non-toxicity requirements as specified in the D.P.R. no.915 of 10 September 1982 |

| 3. Composition: | |
|---|---|
| Montmorillonite | 40% |
| Mold-release sand | 20% |
| Sludge from scrubbing of electric furnace (toxic and harmful) | 25% |
| Ceramic sludge from grinding (toxic and harmful) | 15% |
| Particle size | 200 $\mu$m |
| Drying time | 24 hrs at 75° C |
| Dimensions of sample after drying | 40x40x160 mm |
| Baking Time | 3 hrs at 1130° C |
| Shrinkage after baking | 7% |
| Compression stress | 3000 kg/cm$^2$ (UNI 5632) |
| Bending stress | 300 kg/cm$^2$ (UNI EN 101) |
| Release Test | The sample satisfied the non-toxicity requirements as specified in the D.P.R. no.915 of 10 September 1982 |

**Claims**

1. Process for the recovery of inorganic industrial waste comprising the steps of shaping the waste, in the presence of a thermomeltable binder, into construction products and treating the shaped products at elevated temperature

2. Process for the recovery of inorganic industrial waste comprising:

   a) grinding the industrial waste together with a thermomeltable binder to an average particle size of from 100 to 200 $\mu$m;

   b) mixing the powder thus obtained with water;

   c) shaping the mixture obtained in step b) into construction articles and drying them to constant weight; and

   d) baking the articles of step c) at elevated temperature.

3. Process according to any one of claims 2 and 3, wherein the amount of thermomeltable binder used is higher than 5% by weight of the total dried mixture.

4. Process according to claim 3, wherein the amount of binder ranges from 10 to 60% by weight.

5. Process according to any one of claims 1 to 4 wherein the binder is selected from clay, glass, alumina, silico-aluminates and mixtures thereof.

6. Process according to any one of claims 1 to 5, wherein the industrial waste in powder form is mixed with water in amounts of from 5 to 200% by weight.

7. Process according to any one of claims 1 to 6, wherein the article is dried to constant weight at a temperature below 250° C.

8. Process according to any one of claims 1 to 7, wherein the article is baked at temperatures higher than 800° C, preferably at from 1,000 to 1,500° C and for more than one hour.

9. Articles, obtainable by the process of any one of claims 1 to 8.

10. Articles for the building industry, comprising inorganic industrial waste treated at elevated temperature.

4